# EUROPÄISCHE PATENTSCHRIFT

(11) **EP 2 052 806 B1**
(45) Veröffentlichungstag und Bekanntmachung des Hinweises auf die Patenterteilung: **11.01.2012**
(21) Anmeldenummer: 08015699.5
(22) Anmeldetag: 05.09.2008
(51) Int. Cl.: B23P 19/00, B25B 23/04

(54) **Vorrichtung zum Ausrichten von Befestigungsmitteln mit radial-symmetrischen Mehrkantköpfen in einer Zuführeinrichtung**
Device for aligning attachment devices with radial-symmetrical multi-sided heads in a feed device
Dispositif d'alignement de moyens de fixation avec des têtes polygone symétriques radiales dans un dispositif d'alimentation

(30) Priorität: 25.09.2007 DE 102007045757
(43) Veröffentlichungstag der Anmeldung: 29.04.2009
(73) Patentinhaber: EJOT GmbH & Co. KG, 57334 Bad Laasphe (DE)
(72) Erfinder: Dubiel, Gerhard, 99842 Ruhla (DE); Zeyda, Ralf, 99897 Tambach-Dietharz (DE)
(74) Vertreter: Bardehle, Heinz

(56) Entgegenhaltungen:
- DE-A1- 19 750 741
- DE-U1- 8 324 773
- US-A- 4 841 832

## Beschreibung

Die Erfindung bezieht sich auf eine Vorrichtung zum Ausrichten von Befestigungsmitteln mit radialsymmetrischen Mehrkantköpfen in einer Zuführeinrichtung für diese Befestigungsmittel zu einer Verarbeitungsstation, in der ein Zuführungskanal für die Befestigungsmittel ein Rohrstück mit in seinem Inneren axial verlaufenden Nuten enthalten ist, deren Anzahl der Anzahl der Kanten der Köpfe der Befestigungsmittel entspricht. Bei diesen Befestigungsmitteln kann es sich Beispielsweise um Sechskantschrauben, Mehrkantmuttem, Mehrkantnieten und dergleichen handeln.

Bei der Zuführung derartiger Befestigungsmittel zu einer Verarbeitungsstation ergibt sich regelmäßig das Problem, dass wegen der notwendigen verdrehungssicheren Erfassung der Befestigungsmittel in einer Verarbeitungsstation die Befestigungsmittel in ausgerichteter Lage für in der Verarbeitungsstation wirksame Aufnahmeelemente zur Verfügung stehen, d. h. im Falle von Sechskantschrauben mit einem so ausgerichteten Sechskant, dass einem den Sechskant sicher erfassendes Aufnahmeorgan das zugeführte Befestigungsmittel in einer auf das Aufnahmeorgan ausgerichteten Lage zugeführt wird.

Eine in diesem Sinne wirksame Ausrichtvorrichtung ist in der deutschen Offenlegungsschrift DE 197 50 741 A1 offenbart. Bei den gemäß dieser Druckschrift zu bearbeitenden Befestigungsmitteln handelt es sich um vemietbare Teile mit einem Kopf, insbesondere für die Verarbeitung an Bekleidungsstücken, die einer kreisringsförmigen Fördereinrichtung in einer Ausrichtposition zugeführt werden, in der diese Teile durch Drehung mit einer an ihnen angebrachten Ausrichtfläche in Übereinstimmung mit einer Gegenfläche an einer Ausrichtschiene gebracht werden. Bei passender Anlage der Ausrichtfläche zu der Ausrichtschiene wird das betreffende Teil in der dieser ausgerichteten Lage weitergefördert und kann dann entsprechend verarbeitet werden. Die Methode der Verdrehung des jeweiligen Teils, bis dieses mit seiner Fläche an die genannte Gegenfläche anliegt, ist in vielen Fällen nicht anwendbar, da derartige Befestigungsmittel meist in Rohren, Schläuchen und dergleichen gefördert werden, die einen Zugriff auf die Befestigungsmittel von außen her unmöglich machen.

Es ist weiterhin eine Zuführeinrichtung für Sechskantschrauben durch die US-PS 4,841,832 A bekannt, bei der ein Rohrstück mit durchgehend kreisrundem Querschnitt als Führung für Sechskantschrauben vorgesehen ist, an deren Ende ein Orientierungsteil für die Köpfe von Sechskantschrauben vorgesehen ist, das in Bezug auf die Länge des Zuführungsweges besonders kurze Schrägflächen aufweist, von deren eine hinsichtlich der Lage eines Sechskantkopfes ausrichtende Wirkung ausgehen soll. Auf jeden Fall sind diese Flächen so kurz, dass nicht ausgeschlossen werden kann, dass einlaufende Schraubenköpfe auf diese Flächen auftreffen und in der betreffenden Lage aufgrund gegebener Reibung festgehalten werden.

Eine weitere Zuführeinrichtung ist durch die DE-C1- 484 109 bekannt.

Der Erfindung liegt daher die Aufgabe zugrunde, eine Vorrichtung zum Ausrichten von Befestigungsmitteln der oben angegebenen Art zu schaffen, bei der ohne zusätzlichen mechanischen Aufwand ohne Störung des Fördervorgangs die Befestigungsmittel gewissermaßen mit sanftem Druck so ausgerichtet werden, dass sie in gewünschter ausgerichteter Lage in eine Station für die Weiterverarbeitung gelangen. Erfindungsgemäß ist diese Vorrichtung so gestaltet, dass das Rohrstück in seinem Inneren axial verlaufende Nuten aufweist, deren Anzahl der Anzahl der Kanten der Köpfe der Befestigungsmittel entspricht und der Durchmesser der Nutenecken auf der Eintrittsseite des Rohrstücks größer ist als das Übereckmaß der Mehrkantköpfe wobei die Nuten in Förderrichtung von einer großen Weite zu einer engen Weite derart übergehen, dass in das Rohrstück eintretende Befestigungsmittel mit großem Spiel gegenüber den Nuten eingefangen werden und mit engem Spiel und damit in ausgerichteter Lage das Rohrstück verlassen, wobei die Kanten der Nuten von der Eintrittsseite des Rohrstücks zur Austrittsseite hin in die Nuten verbindende Flächen übergehen, die im Querschnitt den Köpfen der Befestigungsmittel so angepasst sind, dass die Befestigungsmittel mit geringem Spiel auf der Austrittsseite in ausgerichteter Lage austreten.

Durch den Einbau des Rohrstücks mit seinen im Innem axial verlaufenden Nuten in den Zuführungskanal erfolgt die Ausrichtung der zugeführten Befestigungsmittel in eine gewünschte Winkellage, ohne dass von außen her in den Zuführungskanal eingegriffen werden muss, da in den Zuführungskanal selbst die von außen her nicht zugänglichen Ausrichtmittel eingebaut sind, die den Befestigungsmitteln auf dem Wege durch das Rohrstück die gewünschte Lage für die Weiterverarbeitung aufzwingen. Die Befestigungsmittel werden dabei von dem Rohrstück aufgenommen, wobei die Kanten der Köpfe der Befestigungsmittel in die Nuten hineinragen und dann von den sich in Förderrichtung verengenden Nuten gegebenenfalls gedreht werden, bis sie an der Austrittsseite des Rohrstücks in erzwungener Winkellage gegenüber dem Rohrstück dieses verlassen und damit zu einem Verarbeitungswerkzeug in diesem Werkzeug angepasster Lage aus dem Rohrstück austreten. Die Ausrichtung der Befestigungsmittel erfolgt dadurch in besonders günstiger Weise, dass die Kanten der Nuten von der Eintrittsseite des Rohrstücks zur Austrittsseite hin in die Nuten verbindenden Flächen übergehen, die im Querschnitt den Köpfen der Befestigungsmittel so angepasst sind, dass die Befestigungsmittel mit geringem Spiel auf die Austrittsseite austreten. Aufgrund dieser Gestaltung des Rohrstücks werden die in dieses eingeführten Befestigungsmittel zunächst von den Kanten der Nuten grob ausgerichtet, um dann in den Bereich der die Nuten verbindenden Flächen zu gelangen, die schließlich an der Austrittsseite im Querschnitt den Köpfen der Befestigungsmittel entsprechen, so dass durch diese Flächen eine besonders genaue Ausrichtung der Befestigungsmittel hinsichtlich deren Winkellage erzielbar ist.

Ein besonderer Vorteil der Verwendung des Rohrstücks besteht darin, dass die Befestigungsmittel durch das Rohrstück sowohl mit dem Kopf vorwärts als auch mit dem Kopf am rückwärtigen Ende des Befestigungsmittels durch das Rohrstück gefördert werden können, da dieses mit den Nuten bzw. Flächen unabhängig von der Längslage der Befestigungsmittel diese in ihrer Winkellage ausrichten können.

In den Figuren sind Ausführungsbeispiele der Erfindung dargestellt. Es zeigen:
- Figur 1: in prinzipieller Darstellung die Zusammenfassung einer Zuführeinrichtung von Befestigungs- mitteln zu einer Verarbeitungsstation unter Zwischenschaltung eines Rohrstücks zum Aus- richten der Befestigungsmittel;
- Figur 2: ein nicht erfindungsgemässes Rohrstück und ein vor seiner Eintrittsseite gehaltenes Befestigungsmittel in Form einer Sechskantschraube;
- Figur 3: die Anordnung gemäß Figur 2 in einer Ansicht der Austrittsseite des Rohrstücks und einer daraus geförderten Sechskantschraube;
- Figur 4: ein Rohrstück gemäß Figur 2 in perspektivischer Sicht auf dessen Eintrittsseite;
- Figur 5: eine erfindungsgemässe Anordnung ähnlich derjenigen gemäß Figur 2, aber mit einem Rohrstück mit Nuten und diese verbindenden Flächen;
- Figur 6: eine Anordnung ähnlich der Darstellung in Figur 3, wobei die zwischen den Nuten liegenden Flächen an der Austrittsseite deutlich erkennbar sind;
- Figur 7: eine Draufsicht auf die Eingangsseite des Rohrstücks gemäß Figur 2 mit Darstellung der Durchmesserverhältnisse von Befestigungsmittel und Rohrstück;
- Figur 8: die Austrittsseite der Anordnung gemäß Figur 5 in Draufsicht.

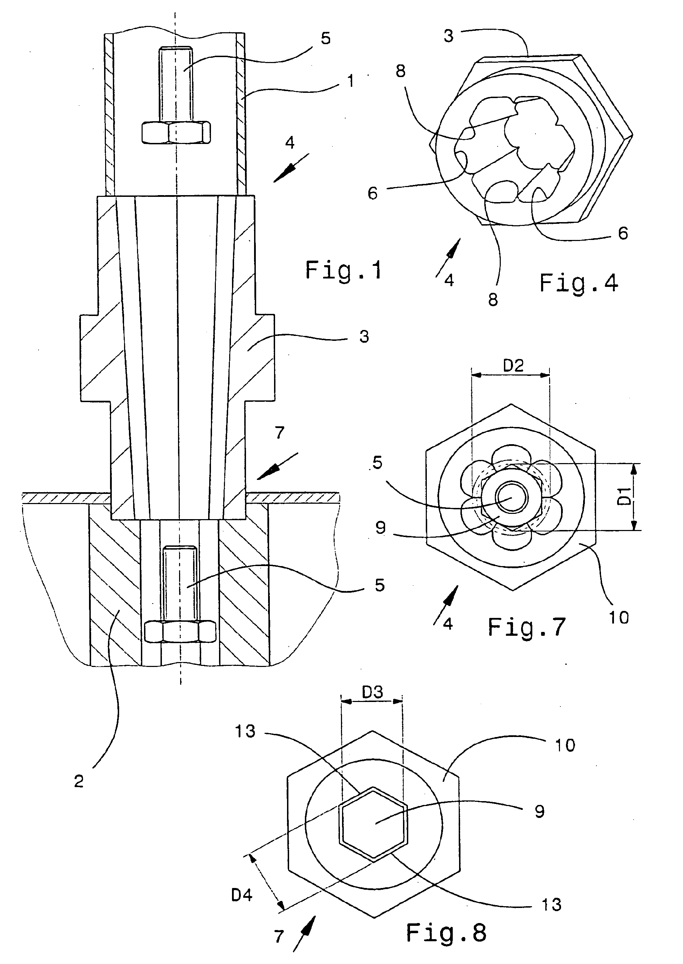

In der Figur 1 ist in prinzipieller Darstellungsweise eine Vorrichtung zum Ausrichten von Befestigungsmitteln mit radial-symmetrischen Mehrkantköpfen dargestellt, die eine Zuführeinrichtung 1 für die Befestigungsmittel und eine Verarbeitungsstation 2 enthält. Die Verbindung von der Zuführeinrichtung 1 zur Verarbeitungsstation 2 verläuft über das Rohrstück 3, das zum Ausrichten von geförderten Befestigungsmitteln dient und dessen Funktion und Struktur in den folgenden Figuren im Einzelnen dargestellt ist.

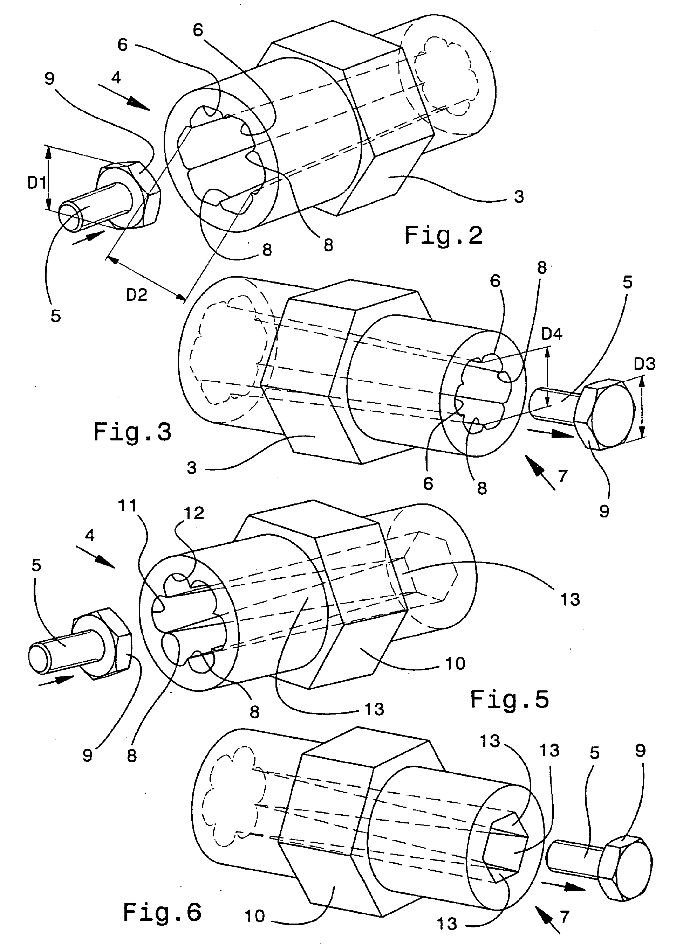

Figur 2 zeigt ein nicht erfindungsgemässes Rohrstück 3, und zwar in perspektivischer Sicht mit seiner dem Betrachter zugewandten Eintrittsseite 4. Vor der Eintrittsseite 4 ist das durch eine Sechskantschraube 5 dargestellte Befestigungsmittel wiedergegeben, dessen Sechskantkopf 9 der Eintrittsseite 4 zugewandt ist und im Laufe der Bewegung des Befestigungsmittels 5 in das Rohrstück 3 einzuführen ist.

Das Rohrstück 3 enthält sechs axial verlaufende Nuten 6, die durch das gesamte Rohrstück 3 hindurch verlaufen und an der in Figur 3 dargestellten Austrittsseite 7 im Querschnitt sichtbar sind, worauf weiter unten näher eingegangen wird.

Die in Figur 2 dargestellten Nuten 6 sind gegeneinander durch die Kanten 8 voneinander getrennt, die längs des gesamten Rohrstücks 3 verlaufen und an der Austrittsseite des Rohrstücks 3 entsprechend sichtbar sind (siehe Figur 3).

Der durch die längs des Rohrstücks 3 verlaufenden Kanten 8 der Nuten 6 definierte Durchmesser D2 (siehe auch Figur 7) ist so groß gewählt, dass er größer ist als das Übereckmaß D1 des Mehrkantkopfes 9 des Befestigungsmittels 5, so dass dieses problemlos in die Eintrittsseite 4 des Rohrstücks 3 eingeschoben werden kann.

Im Verlauf des Vorgangs (Figur 3) des Durchführens der Sechskantschraube 5 durch das Rohrstück 3 treten die Kanten 8 der Nuten 6 in Kontakt mit den Flächen des Mehrkantkopfes 9, womit dieser sich hinsichtlich seiner Winkellage in Bezug auf das Rohrstück 3 so ausrichtet, dass die Sechskantschraube 5 von den Nutenecken 8 in einer Lage geführt wird, in der deren Ecken in die Wölbungen der Nuten 6 hineinragen.

Dieser Vorgang wirkt sich aufgrund der Verengung der das Rohrstück 3 durchlaufenden Nuten 6 derart aus, dass schließlich das an der Austrittsseite 7 austretende Befestigungsmittel 5 genau winkelmäßig zum Rohrstück 3 ausgerichtet aus diesem heraustritt, womit es dann in der Verarbeitungsstation direkt erfasst werden kann.

Während die Nuten 6 auf der Eintrittsseite 4 die Sechskantschraube 5 mit großem Spiel umfassen, ergibt sich auf der Austrittsseite des Rohrstücks 3 gegenüber dem Sechskantkopf 9 ein nur geringes Spiel aufgrund der dort gegebenen Verengung der Nuten 6, wozu das Übereckmaß des Mehrkantkopfes 9, nämlich das Maß D3, nur ein enges Spiel gegenüber den Nuten 6 auf der Austrittsseite des Rohrstücks 3 belässt.

In der Figur 4 ist in perspektivischer Darstellung eine Draufsicht auf die Eintrittsseite 4 des Rohrstücks 3 dargestellt, das die Nuten 6 und die die Nuten trennenden Kanten 8 zeigt, die sich unter gegenseitiger Annäherung durch das Rohrstück 3 hindurch bis auf dessen Austrittsseite hin erstrecken (siehe Figur 3).

In der Figur 5 ist die erfindungsgemässe Gestaltung des Rohrstücks dargestellt. Das hier gezeigte Rohrstück 10 enthält ebenfalls Nuten 11, 12 und weitere Nuten, die jeweils zunächst an der Eintrittsstelle 4 eine Kante 8 bilden, die dann im weiteren Verlauf durch das Rohrstück 10 hindurch sich zu einer Fläche 13 erweitert, die sich bis zur Austrittsseite des Rohrstücks 10 hin erstreckt.

In Figur 6 ist die Austrittsseite 7 des Rohrstücks 10 in perspektivischer Darstellung gezeigt, die deutlich die zwischen den verbleibenden schmal gewordenen Nuten 11 und 12 die Flächen 13 (und weitere Flächen) zeigt, die sich radial nach innen annähern und das Durchgangsloch in dem Rohrstück 10 entsprechend verringern. Durch diese Verringerung ergibt sich eine Anpassung des Durchgangslochs des Rohrstücks 10 an die Form des Sechskantkopfes 9 der Sechskantschraube 5, die mit nur geringem Spiel gegenüber den die Nuten 11 und 12 verbindenden Flächen 13 von diesen geführt wird und damit hinsichtlich ihrer Winkellage ein sehr genaues und beschränktes Maß einnimmt.

In der Figur 7 ist eine Draufsicht auf die Eintrittsseite 4 des Rohrstücks 3 dargestellt, wobei durch einen gestrichelten Kreisbogen das Übereckmaß des dargestellten Sechskantkopfes 9 angegeben ist und in strichpunktierter Darstellung der Durchmesser D2 der Nutenecken dargestellt ist. Aus Figur 7 geht deutlich hervor, dass das dargestellte Befestigungsmittel mit dem Mehrkantkopf 9 in jeder beliebiger Winkellage in das Rohrstück 3 auf dessen Eintrittsseite eingeschoben werden kann, woraufhin dann beim Durchlaufen durch das Rohrstück 3 entweder die Ecken 8 gemäß Figur 1 oder die Flächen 13 gemäß Figur 4 wirksam werden, durch die dann der Sechskantkopf 9 entsprechend ausgerichtet wird.

Diese Ausrichtung aufgrund der Flächen 13 ist in Figur 8 dargestellt, in der die Austrittsseite des Rohrstücks 10 dargestellt ist, auf der die Flächen 13 und der Sechskantquerschnitt des Sechskantkopfes 9 deutlich ersichtlich sind.

## Patentansprüche

1. Vorrichtung zum Zuführen und Ausrichten von Befestigungsmitteln (5) mit radialsymmetrischen Mehrkantköpfen (9) zu einer Verarbeitungsstation (2), in der ein Rohrstück (3) als Zuführungskanal für die Befestigungsmittel (5) vorgesehen ist, wobei as Rohrstück (3) in seinem Inneren axial verlaufende Nuten (6, 11, 12) aufweist, deren Anzahl der Anzahl der Kanten der Köpfe (9) der Befestigungsmittel (5) entspricht und der Durchmesser der Nutenecken auf der Eintrittsseite (4) des Rohrstücks (3) größer ist als das Übereckmaß der Mehrkantköpfe (9), wobei die Nuten (6, 11, 12) in Förderrichtung von einer großen Weite zu einer engen Weite derart übergehen, dass in das Rohrstück (3) eintretende Befestigungsmittel (5) mit großem Spiel gegenüber den Nuten (6, 11, 12) eingefangen werden und mit engem Spiel und damit in ausgerichteter Lage das Rohrstück (3) verlassen, **dadurch gekennzeichnet, dass** die Kanten (8) der Nuten (6) von der Eintrittsseite des Rohrstücks (3) zur Austrittsseite hin in die Nuten verbindenden Flächen (13) übergehen, die im Querschnitt den Köpfen (9) der Befestigungsmittel (5) so angepasst sind, dass die Befestigungsmittel (5) mit geringem Spiel auf der Austrittsseite in ausgerichteter Lage austreten.

## Claims

1. An apparatus for feeding and aligning fasteners (5) having radially symmetrical polygonal heads (9) in a device (2) to a processing station (2), in which a tubular piece (3) is provided as feed channel for the fasteners (5), wherein the tubular piece (3) comprises axially running grooves (6; 11, 12) in its interior the number of these grooves corresponding to the number of edges of the heads (9) of the fasteners (5), and the diameter of the groove corners on the inlet side (4) of the tubular piece (3) being greater than the width across the corners of the polygonal heads (9), the grooves (6; 11, 12) tapering from a large width to a narrow width in the transport direction in such a way that fasteners (5) entering the tubular piece (3) are captured with a large clearance in relation to the grooves (6; 11, 12) and leave the tubular piece (3) with a narrow clearance and thus in their aligned position, xharacterized in that the edges (8) of the grooves (6) turn into surfaces connecting the grooves from the inlet side of the tubular piece (3) to the outlet side, the cross-sections of these surfaces being adapted to the heads (9) of the fasteners (5) in such a way that the fasteners (5) exit with narrow clearance on the outlet side in their aligned position.

## Revendications

1. Dispositif d'alimentation et d'alignement de moyens de fixation (5) avec des têtes polygones symétriques radiales (9) par rapport à une station de transformation (2) dans laquelle une pièce de tube (3) est prévue comme canal d'alimentation pour les moyens de fixation (5), la pièce de tube (3) étant équipée dans son intérieur avec de rainures ayant un parcours axial (6, 11, 12) dont le nombre correspond au nombre des bordures des têtes (9) des moyens de fixation (5) et étant le diamètre des angles des rainures sur le côté d'entrée (4) de la pièce du tube (3) majeur que les dimensions diagonales des têtes polygones symétriques radiales (9), en passant les rainures (6, 11, 12) en direction du transport d'une largeur entendue vers une largeur réduite, les moyens de fixation (5) rentrant dans la pièce du tube (3) étant intégrés avec un jeu élevé par rapport aux rainures (6, 11, 12) et laissent la pièce de tube (3) avec un jeu réduit et donc dans une position alignée, **caractérisé en ce que** les bords (8) des rainures (6) passent de la partie d'entrée du pièce du tube (3) vers la partie de sortie dans les surfaces connectant les rainures (13) qui sont tellement adaptées dans la coupe transversale aux têtes des moyens de fixation (5) que les moyens de fixation (5) sortent avec un jeu réduit sur la partie de sortie dans une position alignée.
